# EUROPEAN PATENT SPECIFICATION

(11) **EP 2 627 789 B1**
(45) Date of publication and mention of the grant of the patent: **08.07.2020**
(21) Application number: 11770363.7
(22) Date of filing: 11.10.2011
(51) Int. Cl.: C21D 8/04, C21D 9/48, B32B 15/01

(54) **A STEEL STRIP COMPOSITE AND A METHOD FOR MAKING THE SAME**
BANDSTAHLVERBUNDSTOFF UND VERFAHREN ZU SEINER HERSTELLUNG
COMPOSITE DE BANDES D'ACIER ET SON PROCÉDÉ DE FABRICATION

(30) Priority: 11.10.2010 EP 10013487
(43) Date of publication of application: 21.08.2013
(73) Proprietor: Tata Steel IJmuiden B.V., NL-1951 JZ VELSEN-NOORD (NL)
(72) Inventor: Van DE LANGKRUIS, Jörgen, 1951 JZ Velsen-Noord (NL); LAHAYE, Christian, Theodorus, Wilhelmus, 1951 JZ Velsen-Noord (NL)
(74) Representative: Group Intellectual Property Services
(86) International application number: PCT/EP2011/005065
(87) International publication number: WO 2012/048844

(56) References cited:
- EP-A2- 1 195 208
- DE-A1- 10 353 479
- JP-A- 2 281 937
- JP-A- 5 001 328
- JP-A- 2002 160 044
- US-A- 2 782 497
- US-A1- 2006 219 334

## Description

### FIELD OF THE INVENTION

The invention relates to a method for producing a steel strip composite and to a steel strip composite produced by said method.

### BACKGROUND OF THE INVENTION

Advanced high strength steels (AHSS) and ultra-high strength steels (UHSS) are commonly used in the automotive industry due to their improved yield strength and ductility compared to other high strength steels (HSS). High strength steels are typically hardened by solid solution, precipitation or grain refining, whereas AHSS are hardened by phase transformation. AHSS and UHSS contain microstructures based on austenite, ferrite, bainite and martensite and include dual phase (DP) steel, transformation induced plasticity (TRIP) steel, TRIP assisted dual phase (TADP) steel and Twinning induced plasticity (TWIP).To enable their use in the automotive industry AHSS/UHSS steels are hot-dip galvanised to afford corrosion protection to the underlying AHSS/UHSS substrate Such a process is known from US2006219334 (A1) in which a steel blank is heated and press-hardened in a hot-forming tool and thereafter hot-dip galvanised to form a zinc corrosion-prevention layer on the surface press-hardened blank. However,in order to reach the desired strength levels and to control phase transformation, alloying elements such as silicon, manganese, chromium and aluminium are required, silicon is particularly favourable since it is relatively inexpensive. It is known that the inclusion of the above alloying elements, particularly silicon in AHSS/UHSS, reduces zinc wetting and/or zinc adhesion during hot-dip galvanising; consequently a reduction in the galvanised surface quality to unacceptable levels is observed.

Alternative galvanising methods such as electro-zinc galvanising could be used in lieu of hot-dip galvanising, but such methods tend to be more expensive and bring with them the risk of hydrogen ingress and associated embrittlement.

Therefore the problem arises that it is difficult to provide a steel strip having improved strength and ductility in combination with an acceptable up to excellent hot-dip galvanisability.

JP2002160044 (A) describes a high strength multiple-layered steel sheet with good press formability and wettability to plating, which comprises a base layer having an inner layer which is composed of C: 0.05 to 0.15, Si: 0.4 to 2.0, Mn: 1.5 to 2.8, Al: 0.005 to 0.5 in mass % with Fe and inevitable impurities as the balance and a surface layer composed of C: 0.05 to 0.15, Si: 0.4 to 2.0, Mn: 1.5 to 2.8, Al: 0.005 to 0.5, Ni: 0.01 to 5.0, Cu: 0.01 to 5.0 in mass % with Fe and inevitable impurities as the balance.

JP02281937 (A) aims to improve the sharpness and corrosion resistance of a galvanised layer formed on the surface of a clad steel sheet. According to JP2281937 A, this may be achieved by controlling the amount of sulfur and copper in the clad, galvanising the clad steel and thereafter forming a pattern on the galvanised surface by intermittently applying laser beams to the galvanised surface. It is an object of this invention to provide a method for improving the hot-dip galvanisability of steels having a high alloy content.

It is a further object of this invention to provide a steel having improved strength and ductility in combination with an acceptable up to excellent hot dip galvanisability.

### SUMMARY OF THE INVENTION

According to a first aspect of the invention there is provided a three-layer steel strip composite consisting of a steel strip having a first microstructure disposed between two steel strips having a second microstructure, wherein (i) the steel strip having the first microstructure is selected from the group consisting of (a) a TRIP steel containing in weight % 0.10 - 0.30 % C, 1.0 - 3.5 % Mn, 0.2 - 0.8 % Si and 0.5 - 2.0 % Al, (b) a TWIP steel containing in weight % between 10 and 40 % manganese and up to 10 % aluminium, (c) a quenched and partitioned steel containing in weight % 0.15 - 0.4% C, 1.0 - 3.0% Mn, 1.0 - 2.5% Si, 0 - 0.5% Mo and 0 -1.0% Cr and (d) a low density steel containing in weight % 0 - 0.2% C, 0 - 2.0% Si, 0 - 5% Mn, 2 - 17% Al, 0 - 3% Cr, 0 -0.2% Ti and 0 - 0.2% Ce, wherein (ii) the steel strip having the second microstructure is selected from the group consisting of an interstitial-free, extra low carbon, ultra low carbon or low carbon steel containing in weight % 0 - 0.1% C, 0 - 1.0% Mn, 0 - 0.1% Si, 0 - 0.1% Al and 0 - 0.1% Cr and wherein (iii) a metal or metal alloy coating comprising zinc, aluminium or an alloy thereof is present on each steel strip having the second microstructure on a surface opposite to the surface contacting the steel strip having the first microstructure.

The steel strip having the first microstructure (core) exhibits high strength and ductility due to a high alloying element content in the core. In this respect the steel strip core preferably contains at least 2 wt% Mn and/or at least 0.5 wt% Si. However, the same alloying elements reduce the wetting and/or adhesion of the metal or metal alloy coating to the steel core substrate. As a consequence, the surface quality of such an applied coating would be of an unacceptable level. In contrast, the steel strip having the second microstructure (clad) is highly formable and comprises a low alloying element content that promotes wetting and/or adhesion of the metal or metal alloy coating to the clad. The inventors have found that by providing a steel strip composite consisting of two steel strips having a low content of alloying elements and a steel strip having a high alloy content disposed therebetween, it was possible to provide a composite having improved strength and ductility together with improved coating performance. By improved coating performance, it should be understood that the formation of bare spots, cracks or flakes in or on the metallic coating are reduced or eliminated.

A composite comprising AHSS or UHSS steels such as TRIP or TWIP steels exhibits improved strength and ductility characteristics relative to other high strength steels. As a consequence, the down-gauging potential of such AHSS and UHSS is improved; such properties are particularly attractive to the automotive sector where weight reduction is becoming an increasingly important issue.

Preferably the TRIP steel containins in weight % 0.10 - 0.20 % C, 1.0 - 2.0 % Mn, 0.2 - 0.6 % Si and 0.5 - 1.5. Si + Al content in the TRIP steel does not exceed 1.5 wt% but in the absence of Al, Si may be added in the range of 1.0 - 2.0 wt%, preferably 1.0-1.5 wt%.

In the case of TRIP steels the first microstructure comprises a triple phase microstructure of ferrite, bainite and retained austenite. During plastic deformation the retained austenite is transformed into martensite, which results in the steel exhibiting enhanced strength and ductility.

TWIP steels are typically difficult to galvanize. However, the provision of a steel strip having the second microstructure on both sides of the TWIP steel leads to an improved galvanising response of the TWIP steel.

Other alloying elements such as P, Ti, V, Ni, Nb, B and Ta can be present in the quenched and partitioned steel but only in small amounts. The microstructure of the Q&P steel comprises martensite and carbon-enriched austenite, and in certain instances, equiaxed ferrite. The Q&P steel is heated to form austenite, either partially or fully, followed by quenching to a temperature between the martensite start temperature (Mₛ) and the martensite finish temperature (M_{f}), thereby creating a controlled amount of martensite and retained austenite. The Q&P steel is then subjected to a thermal treatment to partition carbon from the martensite into the austenite. By partitioning, the formation of carbides is suppressed and the austenite is stabilised rather than decomposed. The stabilisation of austenite results in the steel exhibiting improved ductility relative to traditional high strength steels

Preferably the low density steel contains in weight % 0.005 - 0.2% C, 0 - 1.5% Si , 0 - 3.0% Mn, 2.0 - 9.0% Al, 0 - 2.1% Cr, 0 - 0.1% Ti and 0 - 0.15% Ce, the remainder being iron and unavoidable impurities. Low density steels comprise a ferritic microstructure or a ferritic and austenitic microstructure in the case of low density duplex steels comprising 10-30 wt% Mn and 5-10 wt% Al.

Preferably the steel strip having the second microstructure is an interstitial-free (IF), extra low carbon (ELC), ultra low carbon (ULC) or low carbon (LC) steel, preferably containing in weight % 0.001 - 0.005% C, 0.05 - 1% Mn, 0 - 0.1% Si, 0 - 0.1 Al and 0 - 0.1 Cr the remainder being iron and unavoidable impurities. Other alloying elements such as Mo, P, Ti, V, Ni, Nb and Ta can be present but only in small amounts.

The above steel clad substrates all comprise a low content (≤1 wt%) of alloying elements and therefore the presence of the corresponding alloy-oxides is also low. By having a low content of alloy-oxides the wettability of the metal or metal alloy coating he clad is increased to an extent where the surface quality of the applied coating is of an acceptable level.

In a preferred embodiment of the invention the metal or metal alloy coating is zinc, aluminium or an alloy thereof. By coating each steel strip having the second microstructure with zinc, aluminium or an alloy thereof, the steel is afforded sacrificial corrosion protection since the zinc and aluminium, will oxidise in preference to iron in the steel.

In a preferred embodiment of the invention the metal alloy may further comprise magnesium to improve the corrosion resistance and the conductivity of the sacrificial corrosion layer. Other elements such as Si, Ti, Cu, Ni, Co and Cr may also be present in the metal alloy coating. In a preferred embodiment of the invention each steel having the second microstructure comprises 1-10%, preferably 1-5% of the total thickness of the steel strip composite. Each strip having the second microstructure should not exceed a thickness that is greater than 10% of the total thickness of the composite otherwise the overall strength of the steel strip composite is reduced. However, the thickness of each strip having the second microstructure should not be less than 1% of the total thickness of the composite since this results in the formation of bare spots and/or flaking of the metallic coating. If each strip having the second microstructure has a thickness of 5% then the composite exhibits an improved galvanising response and an improvement in weldability relative to composites comprising less than 5% of the steel strip having the second microstructure.

In a preferred embodiment of the invention the thickness of the steel strip composite is between 0.5 and 10 mm, preferably between 0.5 and 4 mm and more preferably between 0.5 and 2.5 mm.

In a preferred embodiment of the invention the steel strip having the first microstructure comprises austenite.

In a preferred embodiment of the invention the steel strip composite has yield strength of 400 MPa or above, making such composites suitable for automotive applications.

In a preferred embodiment of the invention the steel strip composite has a tensile strength of 800 MPa or above, making such composites suitable for automotive applications.

According to a second aspect of the invention there is provided a method for producing a three-layer steel strip composite according to the first aspect of the invention, which comprises the steps of providing a steel plate having a first microstructure and two steel strips having a second microstructure; deoxidising and cleaning the steel plate and each steel strip and disposing the steel plate between the two steel strips to form a three-layer stack package; rolling the stack package to form the composite and providing a metallic coating on each steel strip having the second microstructure on a surface opposite to the surface contacting the steel strip having the first microstructure.

By following the above method it is possible to provide steel strip composite having improved strength and ductility in combination with improved coating performance. The contact surfaces of the steel plate having the first microstructure and the steel strip having second microstructure are deoxidised and cleaned by brushing, grinding and/or pickling before the steel strips are stacked to form the stack package. By cleaning before stacking, inter-metallic particles which could cause brittleness are substantially absent.

In a preferred embodiment of the invention the composite is formed by hot-rolling, cold rolling or by hot-rolling followed by cold rolling. When the composite is formed by hot-rolling, the three-layer stack package is heated and hot-rolled between 1250°C and 800°C; the temperature after the final hot-rolling pass should be above the austenitic (Ac) temperature. The composite thus produced has a thickness of approximately 4 mm. The composite is then subjected to a controlled cooling to a coiling temperature in order to control phase transformations in the steel. The composite is coiled and left to cool to room temperature before being cold-rolled to reduce the thickness of the composite still further. Preferably the cold rolled steel composite has a thickness of 1.5 mm. The composite is then subjected to a continuous annealing cycle and subsequently provided with a metallic coating on each steel strip having the second microstructure on a surface opposite the surface contacting the steel strip having the first microstructure. When the composite is formed by cold rolling, at least one cold rolling pass with a reduction of 25 -50%, preferably 30 - 50% and more preferably 35 - 45% is required. Steel strip composites, whether formed by hot-rolling, by cold-rolling or by hot-rolling followed by cold-rolling exhibit full metallic bonding between the atoms of the strip having the first microstructure and the strip having the second microstructure.

In a preferred embodiment of the invention the stack package is circumferentially welded before the step of rolling. By welding the steel strip having the first microstructure and the steel strip having the second microstructure together, oxygen is prevented from entering into contact with interface therebetween, which would otherwise result in the oxide formation and growth at the interface.

In a preferred embodiment of the invention the metallic coating is provided by hot-dip galvanising or by electro-galvanising.

### BRIEF DESCRIPTION OF THE DRAWINGS

The invention will now be elucidated by way of example making reference to the accompanying figures.
Figure 1 shows schematically a cross section of a three-layer steel strip composite.
Figure 2 shows an annealing and galvanising cycle for the three-layer steel strip composite wherein
   I am heating rate: ∼20°C/s;
   II is heating rate before anneal: 5-7°C/s;
   III Is soaking 830 or 930 +/-25°C, 60 sec (Standard gas environment and dew point);
   V Quench after anneal (∼20-30°C/s);
   V Galvanising at 460°C for ∼3 sec.
Figure 3 shows (a) the hot-dip galvanising response of a Q&P steel wherein the steel was soaked at 930°C for a period of 60 seconds and wherein the dew point was - 40°C; and (b) a three-layer steel strip composite consisting of a Q&P steel disposed between two low carbon steel strips wherein the composite was soaked at 930°C for a period of 60 seconds and wherein the dew point was -40°C.

According to an example a Q&P steel (**2**) is provided in the form of a cast block, hot-rolled at a temperature of 1250°C and break down rolled from 100 mm to a flat 32 mm plate. Two strips of low carbon steel (**3**) having a strip thickness of 4 mm are cut to a width of approximately 1 mm less than that of the Q&P plate. The contact surfaces of each substrate are brushed and milled before each side of the Q&P plate is provided with a low carbon steel strip, resulting in a 3-layer stack package. The different layers of the stack package are welded together by rectangular arc welding.

The welded 3-layer stack package is then heated to a temperature of 1250°C for 30 minutes before being hot-rolled in six passes 27-17.8-12-8-6-4mm, the final pass being performed at a temperature of 880°C, thereby forming a steel strip composite (**1**). The composite is cooled at a rate of 30°C/s from 840°C to 600°C using a table simulation and cooled to room temperature using a warm coil simulation. The composite is then pickled and cold-rolled to 1.5 mm in 0.5 mm passes.

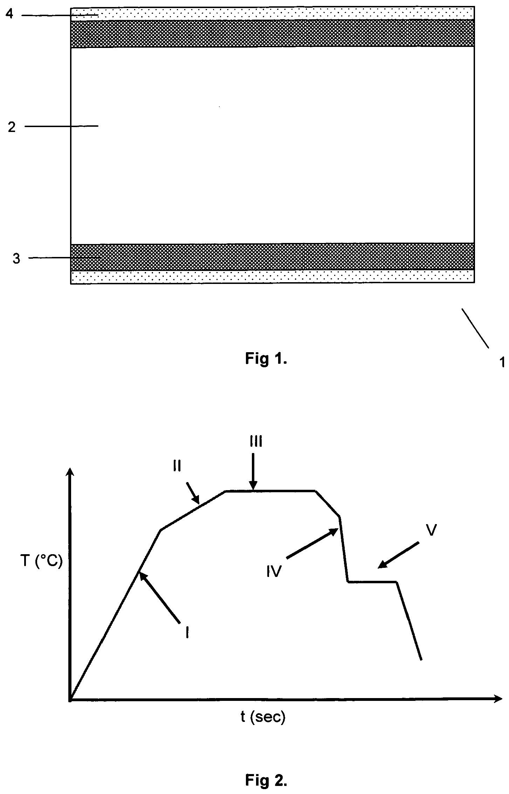

After cold-rolling the composite is annealed and galvanised according to the annealing and galvanising cycle of Figure 2 to provide a zinc coating (4) on each low carbon steel strip (**3**) of the composite (**1**).

In Table 1 below, the chemical compositions (wt% unless specified) of Q&P steel and low carbon steel in accordance with the invention are given.

The chemical composition of advanced and ultra high strength steels such as TWIP and TRIP steels, and low density and low density duplex steels are also given in Table 1. The aforementioned steels contain a high alloying element content and are therefore suitable core materials that can be used in place of the Q&P steel in the steel strip composite.

**Table 1**

| Alloy | C | Mn | Si | Al | Cr | B | Ti |
|---|---|---|---|---|---|---|---|
| Q&P | 0.179 | 1.63 | 1.41 | - | - | 17ppm | 0.002 |
| Low carbon | 0.022 | 0.173 | 0.003 | 0.056 | - | <5ppm | 0.001 |
| TRIP | 0.2 | 1.7 | 1.5 | - | - | - | - |
| TWIP | 0.7 | 14.5 | 0.2 | 3 | - | - | - |
| Low density | 0.47 | 3.4 | - | 9.7 | - | - | - |
| LD duplex | 0.50 | 26.0 | - | 10.0 | - | - | - |

In Table 2 the mechanical properties of a Q&P steel and a composite wherein a Q&P steel is disposed between two strips of low carbon steel are given.

**Table 2**

| Alloy | Rp (MPa) | Rm (MPa) | Ag (%) | A (%) | Erichsen cup height (mm) | Bending angle (°) | Bending strain |
|---|---|---|---|---|---|---|---|
| Q&P | 1071 | 1551 | 5.2 | 9.2 | 6.5 | 56 | 0.30 |
| Composite | 895 | 1355 | 5.7 | 9.8 | 8 | 88 | 0.44 |

The Erichsen cupping test was carried out in accordance with ISO 20482-2003. The Erichsen cup height of the composite is approximately 20% greater than the Q&P steel which was used as a reference. Moreover, the perpendicular bending angle and strain before failure of the composite were 57% and 47% respectively, which is better than the results obtained for the Q&P reference. These improved mechanical properties have been attributed to the improved resistance to crack initiation at the low carbon steel surface.

Visual inspection of the Q&P reference and the steel strip composite after hot-dip galvanising revealed that no zinc wetting was observed on the Q&P reference. However, very good wetting was observed for the composite and no bare spots could be seen.

Zinc adhesion was tested using a standard ½ bending test. Due to the unacceptable zinc wetting on the Q&P reference, the Q&P reference was not tested. After deformation of the composite, the zinc layer exhibited only a few small cracks which is standard. Following the bending test it was not possible to peel the zinc off from the composite which is again indicative of very good zinc adhesion.

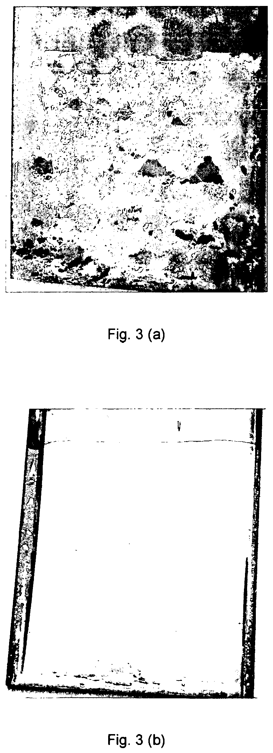

Results relating to the hot-dip galvanising response can be seen in Figure 3.

## Claims

1. A three-layer steel strip composite consisting of steel strip having a first microstructure disposed between two steel strips having a second microstructure, wherein (i) the steel strip having the first microstructure is selected from the group consisting of (a) a TRIP steel containing in weight % 0.10 - 0.30 % C, 1.0 - 3.5 % Mn, 0.2 - 0.8 % Si and 0.5 - 2.0 % Al, (b) a TWIP steel containing in weight % between 10 and 40 % manganese and up to 10 % aluminium, (c) a quenched and partitioned steel containing in weight % 0.15 - 0.4% C, 1.0 - 3.0% Mn, 1.0 - 2.5% Si, 0 - 0.5% Mo and 0 -1.0% Cr and (d) a low density steel containing in weight % 0 - 0.2% C, 0 - 2.0% Si, 0 - 5% Mn, 2 - 17% Al, 0 - 3% Cr, 0 -0.2% Ti and 0 - 0.2% Ce, wherein (ii) the steel strip having the second microstructure is selected from the group consisting of an interstitial-free, extra low carbon, ultra low carbon or low carbon steel containing in weight % 0 - 0.1% C, 0 - 1.0% Mn, 0 - 0.1% Si, 0 - 0.1% Al and 0 - 0.1% Cr and wherein (iii) a metal or metal alloy coating comprising zinc, aluminium or an alloy thereof is present on each steel strip having the second microstructure on a surface opposite to the surface contacting the steel strip having the first microstructure.

2. A steel strip composite according to claim 1 wherein the metal alloy further comprises Mg, Si, Ti, Cu, Ni, Co, Cr or a mixture thereof.

3. A three-layer steel strip composite according to claim 1 or claim 2 wherein each steel having the second microstructure comprises 1-10%, preferably 1-5% of the total thickness of the steel strip composite.

4. A steel strip composite according to any one of the preceding claims wherein the thickness of the steel strip composite is between 0.5 and 10 mm, preferably between 0.5 and 4 mm and more preferably between 0.5 and 2.5 mm.

5. A steel strip composite according to any one of the preceding claims wherein the steel strip having the first microstructure comprises austenite.

6. A steel strip composite according to any one of claims 1-5 wherein the steel strip having the first microstructure is a quenched and partitioned steel containing in weight % 0.15 - 0.22% C, 1.0 - 1.7% Mn, 1.0 - 1.7% Si, 0 - 0.25% Mo and 0 - 0.5% Cr, the remainder being iron and unavoidable impurities.

7. A steel strip composite according to any one of claims 1-5 wherein the steel strip having the first microstructure is a low density steel containing in weight 0.005 - 0.2% C, 0 - 1.5% Si, 0 - 3% Mn, 2 - 9% Al, 0 - 2.1% Cr, 0 - 0.1% Ti and 0 - 0.15% Ce, the remainder being iron and unavoidable impurities.

8. A steel strip composite according to anyone of the preceding claims wherein the steel strip having the second microstructure is an interstitial-free (IF), extra low carbon (ELC), ultra low carbon (ULC) or low carbon (LC) steel containing in weight% 0.001 - 0.005% C, 0.05 - 1% Mn, 0 - 0.1% Si, 0 - 0.1% Al and 0 - 0.1% Cr the remainder being iron and unavoidable impurities.

9. A steel strip composite according to any one of the preceding claims wherein the steel strip composite has a yield strength of 400 MPa or above.

10. A steel strip composite according to any one of the preceding claims wherein the steel strip composite has a tensile strength of 800 MPa or above.

11. Method for producing a three-layer steel strip composite according to any one of claims 1-10, which comprises the steps of providing a steel plate having a first microstructure and two steel strips having a second microstructure; deoxidising and cleaning the steel plate and each steel strip and disposing the steel plate between the two steel strips to form a three-layer stack package; rolling the stack package to form the composite and providing a metallic coating on each steel strip having the second microstructure.

12. Method for producing a steel strip composite according to claim 11 wherein the composite is formed by hot-rolling, cold rolling or by hot-rolling followed by cold-rolling.

13. Method for producing a steel strip composite according to claim 11 or claim 12 wherein the stack package is circumferentially welded before the step of rolling.

14. Method for producing a steel strip composite according to any one of claims 11-13 wherein the step of providing the metallic coating is by hot-dip galvanising or electro-galvanising.

## Patentansprüche

1. Dreilagige Bandstahlverbundstruktur, bestehend aus Bandstahl mit einer ersten Mikrostruktur, die sich zwischen zwei Bandstählen mit einer zweiten Mikrostruktur befindet, wobei (i) der Bandstahl mit der ersten Mikrostruktur ausgewählt ist aus der Gruppe bestehend aus (a) einem TRIP-Stahl, der in Gew.-% 0,10 - 0,30 % C, 1,0 - 3,5 % Mn, 0,2 - 0,8 % Si und 0,5 - 2,0 % Al enthält, (b) einem TWIP-Stahl, der in Gew.-% zwischen 10 und 40 % Mangan und bis zu 10 % Aluminium enthält, (c) einem abgeschreckten und partitionierten Stahl, der in Gew.-% 0,15 - 0,4 % C, 1,0 - 3,0 % Mn, 1,0 - 2,5 % Si, 0 - 0,5 % Mo und 0 - 1,0 % Cr enthält, und (d) einem Stahl niederer Dichte, der in Gew.-% 0 - 0,2 % C, 0 - 2,0 % Si, 0 - 5 % Mn, 2 - 17 % Al, 0 - 3 % Cr, 0 - 0,2 % Ti und 0 - 0,2 % Ce enthält, wobei (ii) der Bandstahl mit der zweiten Mikrostruktur ausgewählt ist aus der Gruppe bestehend aus einem interstitiellfreien Stahl, einem Stahl mit sehr niedrigem Kohlenstoffgehalt, einem Stahl mit ultraniedrigem Kohlenstoffgehalt oder einem Stahl mit niedrigem Kohlenstoffgehalt, der in Gew.-% 0 - 0,1 % C, 0 - 1,0 % Mn, 0 - 0,1 % Si, 0 - 0,1 % Al und 0 - 0,1 % Cr enthält, und wobei (iii) ein Metall- oder ein Metalllegierungsüberzug, der Zink, Aluminium oder eine Legierung davon umfasst, auf jedem Bandstahl mit der zweiten Mikrostruktur auf einer Oberfläche vorhanden ist, die entgegengesetzt ist zu der Oberfläche, die den Bandstahl mit der ersten Mikrostruktur berührt.

2. Bandstahlverbundstruktur nach Anspruch 1, wobei die Metalllegierung ferner Mg, Si, Ti, Cu, Ni, Co, Cr oder ein Gemisch davon umfasst.

3. Dreilagige Bandstahlverbundstruktur nach Anspruch 1 oder Anspruch 2, wobei jeder Stahl mit der zweiten Mikrostruktur 1 - 10 %, vorzugsweise 1 - 5 % der Gesamtdicke der Bandstahlverbundstruktur umfasst.

4. Bandstahlverbundstruktur nach einem der vorstehenden Ansprüche, wobei die Dicke der Bandstahlverbundstruktur zwischen 0,5 und 10 mm liegt, vorzugsweise zwischen 0,5 und 4 mm und darüber hinaus bevorzugt zwischen 0,5 und 2,5 mm.

5. Bandstahlverbundstruktur nach einem der vorstehenden Ansprüche, wobei der Bandstahl mit der ersten Mikrostruktur Austenit umfasst.

6. Bandstahlverbundstruktur nach einem der Ansprüche 1 bis 5, wobei der Bandstahl mit der ersten Mikrostruktur ein abgeschreckter und partitionierter Stahl ist, der in Gew.-% 0,15 - 0,22 %, 1,0 - 1,7 % Mn, 1,0 - 1,7 % Si, 0 - 0,25 % Mo und 0 - 0,5 % Cr enthält, wobei es sich bei dem Rest um Eisen und unvermeidbare Verunreinigungen handelt.

7. Bandstahlverbundstruktur nach einem der Ansprüche 1 bis 5, wobei der Bandstahl mit der ersten Mikrostruktur ein Stahl niederer Dichte ist, der in Gew.-% 0,005 - 0,2 % C, 0 - 1,5 % Si, 0 - 3 % Mn, 2 - 9 % Al, 0-2,1 % Cr, 0-0,1 % Ti und 0 - 0,15 % Ce enthält, wobei es sich bei dem Rest um Eisen und unvermeidbare Verunreinigungen handelt.

8. Bandstahlverbundstruktur nach einem der vorstehenden Ansprüche, wobei der Bandstahl mit der zweiten Mikrostruktur ein interstitiellfreier Stahl (IF), ein Stahl mit sehr niedrigem Kohlenstoffgehalt (ELC), ein Stahl mit ultraniedrigem Kohlenstoffgehalt (ULC) oder ein Stahl mit niedrigem Kohlenstoffgehalt (LC) ist, der in Gew.-% 0,001 - 0,005 % C, 0,05 - 1 % Mn, 0 - 0,1 % Si, 0 - 0,1 % Al und 0 - 0,1 % Cr enthält, wobei es sich bei dem Rest um Eisen und unvermeidbare Verunreinigungen handelt.

9. Bandstahlverbundstruktur nach einem der vorstehenden Ansprüche, wobei die Bandstahlverbundstruktur eine Dehngrenze von 400 MPa oder höher aufweist.

10. Bandstahlverbundstruktur nach einem der vorstehenden Ansprüche, wobei die Bandstahlverbundstruktur eine Zugfestigkeit von 800 MPa oder höher aufweist.

11. Verfahren zur Herstellung einer dreilagigen Bandstahlverbundstruktur nach einem der Ansprüche 1 bis 10, wobei das Verfahren die folgenden Schritte umfasst: Bereitstellen einer Stahlplatte mit einer ersten Mikrostruktur und zwei Bandstählen mit einer zweiten Mikrostruktur; Desoxidieren und Reinigen der Stahlplatte und jedes Bandstahls und Anordnen der Stahlplatte zwischen den zwei Bandstählen, um eine dreilagige Stapeleinheit zu bilden; Walzen der Stapeleinheit, um die Verbundstruktur zu bilden, und Bereitstellen eines metallischen Überzugs auf jedem Bandstahl mit der zweiten Mikrostruktur.

12. Verfahren zur Herstellung einer Bandstahlverbundstruktur nach Anspruch 11, wobei die Verbundstruktur gebildet wird durch Heißwalzen, Kaltwalzen oder durch Heißwalzen gefolgt von Kaltwalzen.

13. Verfahren zur Herstellung einer Bandstahlverbundstruktur nach Anspruch 11 oder Anspruch 12, wobei die Stapeleinheit vor dem Schritt des Walzens umfänglich geschweißt wird.

14. Verfahren zur Herstellung einer Bandstahlverbundstruktur nach einem der Ansprüche 11 bis 13, wobei der Schritt des Bereitstellens des metallischen Überzugs durch Feuerverzinkung oder galvanische Verzinkung ausgeführt wird.

## Revendications

1. Composite de bandes d'acier à trois couches constitué d'une bande d'acier ayant une première microstructure disposée entre deux bandes d'acier ayant une seconde microstructure, (i) la bande d'acier ayant la première microstructure étant choisie dans le groupe constitué par (a) un acier TRIP contenant en % en poids de 0,10 à 0,30 % de C, de 1,0 à 3,5 % de Mn, de 0,2 à 0,8 % de Si et de 0,5 à 2,0 % d'Al, (b) un acier TWIP contenant en % en poids entre 10 et 40 % de manganèse et jusqu'à 10 % d'aluminium, (c) un acier trempé et cloisonné contenant en % en poids de 0,15 à 0,4 % de C, de 1,0 à 3,0 % de Mn, de 1,0 à 2,5 % de Si, de 0 à 0,5 % de Mo et de 0 à 1,0 % de Cr et (d) un acier basse densité contenant en % en poids de 0 à 0.2 % de C, de 0 à 2,0 % de Si, de 0 à 5 % de Mn, de 2 à 17 % d'Al, de 0 à 3 % de Cr, de 0 à 0,2 % de Ti et de 0 à 0,2 % de Ce, (ii) la bande d'acier ayant la seconde microstructure étant choisie dans le groupe constitué par un acier sans interstices, à extra-bas carbone, à ultra-bas carbone ou à bas carbone contenant en % en poids de 0 à 0,1 % de C, de 0 à 1.0 % de Mn, de 0 à 0,1 % de Si, de 0 à 0,1 % d'Al et de 0 à 0,1 % de Cr et (iii) un revêtement métallique ou d'alliage métallique comprenant du zinc, de l'aluminium ou un alliage de ceux-ci étant présent sur chaque bande d'acier ayant la seconde microstructure sur une surface opposée à la surface en contact avec la bande d'acier ayant la première microstructure.

2. Composite de bandes d'acier selon la revendication 1, l'alliage métallique comprenant en outre Mg, Si, Ti, Cu, Ni, Co, Cr ou un mélange de ceux-ci.

3. Composite de bandes d'acier à trois couches selon la revendication 1 ou 2, chaque acier ayant la seconde microstructure constituant de 1 à 10 %, de préférence de 1 à 5 % de l'épaisseur totale du composite de bandes d'acier.

4. Composite de bandes d'acier selon l'une quelconque des revendications précédentes, l'épaisseur du composite de bandes d'acier étant comprise entre 0,5 et 10 mm, de préférence entre 0,5 et 4 mm et de préférence encore entre 0,5 et 2,5 mm.

5. Composite de bandes d'acier selon l'une quelconque des revendications précédentes, la bande d'acier ayant la première microstructure comprenant de l'austénite.

6. Composite de bandes d'acier selon l'une quelconque des revendications 1 à 5, la bande d'acier ayant la première microstructure étant un acier trempé et cloisonné contenant en % en poids de 0,15 à 0,22 % de C, de 1,0 à 1,7 % de Mn, de 1,0 à 1,7 % de Si, de 0 à 0,25 % de Mo et de 0 à 0,5 % de Cr, le reste étant du fer et des impuretés inévitables.

7. Composite de bandes d'acier selon l'une quelconque des revendications 1 à 5, la bande d'acier ayant la première microstructure étant un acier de faible densité contenant en poids de 0,005 à 0,2 % de C, de 0 à 1,5 % de Si, de 0 à 3 % de Mn, de 2 à 9 % d'Al, de 0 à 2,1 % de Cr, de 0 à 0,1 % de Ti et de 0 à 0,15 % de Ce, le reste étant du fer et des impuretés inévitables.

8. Composite de bandes d'acier selon l'une quelconque des revendications précédentes, la bande d'acier ayant la seconde microstructure étant un acier sans interstices (IF), à extra-bas carbone (ELC), à ultra-bas carbone (ULC) ou à bas carbone (LC) contenant en % en poids de 0,001 à 0,005 % de C, de 0,05 à 1 % de Mn, de 0 à 0,1 % de Si, de 0 à 0,1 % d'Al et de 0 à 0,1 % de Cr, le reste étant du fer et des impuretés inévitables.

9. Composite de bandes d'acier selon l'une quelconque des revendications précédentes, le composite de bandes d'acier ayant une limite d'élasticité de 400 MPa ou plus.

10. Composite de bandes d'acier selon l'une quelconque des revendications précédentes, le composite de bandes d'acier ayant une résistance à la traction de 800 MPa ou plus.

11. Procédé de production d'un composite de bandes d'acier à trois couches selon l'une quelconque des revendications 1 à 10, qui comprend les étapes consistant à fournir une plaque d'acier ayant une première microstructure et deux bandes d'acier ayant une seconde microstructure ; à désoxyder et à nettoyer la plaque d'acier et chaque bande d'acier et à disposer la plaque d'acier entre les deux bandes d'acier pour former un paquet d'empilement à trois couches ; à laminer le paquet d'empilement pour former le composite et à fournir un revêtement métallique sur chaque bande d'acier ayant la seconde microstructure.

12. Procédé de fabrication d'un composite de bandes d'acier selon la revendication 11, le composite étant formé par laminage à chaud, laminage à froid ou par laminage à chaud suivi d'un laminage à froid.

13. Procédé de production d'un composite de bandes d'acier selon la revendication 11 ou 12, le paquet d'empilement étant soudé circonférentiellement avant l'étape de laminage.

14. Procédé de production d'un composite de bandes d'acier selon l'une quelconque des revendications 11 à 13, l'étape consistant à fournir le revêtement métallique se faisant par galvanisation à chaud ou électrozingage.
